# EUROPEAN PATENT APPLICATION

(11) **EP 1 695 943 A2**
(43) Date of publication of application: **30.08.2006**
(21) Application number: 06003680.3
(22) Date of filing: 23.02.2006
(51) Int. Cl.: C02F 11/08, C04B 35/00

(54) **Method for recovering the products of wet oxidation and using it for producing ceramic material**

(30) Priority: 28.02.2005 IT MI20050307
(71) Applicant: 3V MATEX S.p..A., 20121 Milano (IT)
(72) Inventor: Sardelli, Franco, 24127 Bergamo (IT); Valle, Massimiliano, 24100 Bergamo (IT)
(74) Representative: Alagem Modiano, Lara S.

(57) **Abstract**

A method for wet oxidation of excess sludge produced by biological purification plants, which utilizes the heat generated by the oxidation of the pollutants that are present. The method leads to an effluent which can be separated into two phases: a liquid (aqueous) one, in which biodegradable substances are dissolved, and a solid (powder) one, which is constituted essentially by water-insoluble inorganic substances and is practically inert. The aqueous phase can be recycled at the head of the biological plant which generated the biological sludge; the solid phase, in view of its nature of substantially inert powder and the fine and uniform particle size, is used in the production of ceramic materials.

## Description

The present invention relates to a method for converting sludge, particularly excess sludge from plants for biological purification of civil and industrial wastewater.

Biological plants for purifying the wastewater of civil and industrial origin produce, during their normal operation, an excess of suspended biomass, which is systematically removed from the production cycle and is known as excess sludge. Excess sludge is characterized by the content of suspended solids (hereinafter SS) and by the weight ratio (volatile suspended solids)/(total suspended solids), hereinafter referenced as VSS/SS, where the expression "volatile suspended solids" designates the fraction of SS which bums or is vaporized by heating in air the total suspended solids at 600°C and is constituted substantially by oxidizable organic substances. The remaining part of the sludge is substantially inorganic. Conventionally, excess sludge is extracted from the biological plant with a solids concentration ranging on average from 0.5% to 1% by weight and is thickened, before being removed, to approximately 2.5-3.5% by weight. If not specified, the concentrations of SS and VSS are understood to be by weight on the total weight of the sludge.

After its extraction, the sludge is conventionally subjected to successive treatments, which include filtration, centrifugation, and reduction in volume by means of a suitable technique, such as wet oxidation, anaerobic fermentation, sludge heating, drying and incineration.

The sludge is then sent to disposal, for example in agriculture or landfills. Disposal in agriculture allows to recover the humifying and fertilizing potential of the sludge. However, severe legal constraints (reference should be made in this regard to directive 86/278/EEC and to Government Legislative Decree no. 99 dated 27 January 1992) make agricultural disposal unfeasible for most industrial sludge, which has an excessively high chemical and bacteriological polluting potential.

Conveyance to a landfill is equally problematic, since besides entailing exponentially rising disposal costs, it is greatly limited by the scarcity of regions adapted to store potentially toxic waste.

The aim of the present invention is therefore to provide a new method for treating sludge, preferably excess sludge originating from plants for biological purification of civil and industrial wastewater, which overcomes the drawbacks of the background art.

An object is to provide a treatment as described above which does not end with conventional disposal of the products of such treatment.

Another object is to provide a method as described above which stabilizes and sanitizes a sludge.

Another object is to provide a method as described above which is economically advantageous and less harmful to the environment than the background art.

Still another object is to provide a method as described above which produces products which are superior to their currently commercially available equivalents.

This aim and these and other objects which will become better apparent hereinafter are achieved by a method for converting and enhancing the value of a biological sludge having an initial SS content of less than 15% by weight on the total weight of the sludge, preferably an excess sludge originating from plants for biological purification of civil and industrial wastewater, comprising the steps of:
i) performing wet oxidation of said sludge until the VSS content is reduced by at least 75% of its initial value;
ii) recovering the product of the oxidation of said sludge and separating the component of said product which contains the liquids from the component which contains the solids; and
iii) using the component of the product which contains the solids recovered in step ii) as raw material to produce a ceramic material.

This aim and these and other objects which will become better apparent hereinafter are achieved by an apparatus for carrying out a method for converting and enhancing the value of biological sludge having an initial SS content of less than 15% by weight on the total weight of the sludge, which comprises:
- means for performing wet oxidation of said sludge,
- means for recovering the component of the sludge oxidation product which contains the solids,
- means for formulating and mixing said recovered component, and
- means for forming and firing said recovered component.

This aim and these and other objects are achieved by a ceramic material which can be obtained according to the method described above.

It is understood that any characteristic which is mentioned with reference to a single aspect of the invention but which can be also referred to other aspects must be considered equally valid with reference to these other aspects even when it is not repeated explicitly.

In one aspect, the invention relates to a method for treating industrial sludge, such as excess sludge, which comprises its wet oxidation, the recovery of the component of the effluent which contains the solids of the oxidation step, and the value enhancement of the residue by subjecting it advantageously first to a formation step, preferably with a combination of atomization and granulation, and then by firing it so as to obtain a ceramic material which has new physical characteristics.

In another aspect, the invention relates to an apparatus for carrying out the method described above. The apparatus comprises means for performing the wet oxidation of sludge, means for recovering the component of the effluent which contains the solids, and means for forming and firing the recovered solid residue.

In another aspect, the invention relates to an intermediate ceramic material, such as a granulate, which can be obtained with the method described above and can be used to produce finished ceramic materials.

In another aspect, the invention relates to finished ceramic materials produced starting from intermediate materials and preferably from a granulate.

A first aspect of the invention relates to a method for treating and enhancing the value of industrial sludge having a pumpable consistency and therefore an SS content of less than 15% by weight on the total weight of the sludge. Preferably, the sludge is excess sludge which originates from plants for biological purification of civil and industrial wastewater.

Currently, no treatments of this sludge beyond reduction in volume and/or removal of the pollutant load are provided. It has now been found surprisingly, instead, that by combining:
- a first step of wet oxidation of the sludge until its organic component is broken down by at least 75% of the initial value,
- a second step in which the effluent of the oxidation is separated into its components which contain the liquids and the solids, and
- a third step, in which the component that contains the solids, which corresponds to a substantially mineral and inert residue, is enhanced in value as a raw material in the field of the production of ceramic materials having different functionalities. Therefore, it is no longer necessary to resort to any form of disposal in the strict sense of the term, since the recovered component can be returned to the industrial cycle with an economical gain and eliminating the environmental damage.

A part of the component which contains the liquids also can be recycled advantageously in the wet oxidation apparatus.

It has been found that a method for wet oxidation of sludge such as excess sludge, if continued until the substrate is inertized, is adapted to convert the sludge into a stabilized mineral residue. The term "stabilized" is used to designate a residue without putrescible organic substances and without a bacterial load, which therefore remains substantially stable over time. Moreover, it has been found that said inertized mineral residue is an unexpectedly advantageous raw material for use in the production of innovative ceramic materials, such as for example dense and light calcined clay for various fields of application, such as refractories, bonding agents for the building sector, concretes, sanitary fixtures, bricks and tiles.

In the field of building materials and of ceramic materials in particular, the use of industrial waste is objectively considered a risk due to the lack of chemical homogeneity among the components of the waste, an aspect which can entail considerable disadvantages as regards the physical properties of the end product. It has been found instead that the mineral residue of the wet oxidation of an excess sludge has an unexpected homogeneity of composition, and this makes it particularly adapted to be used as recycled raw material for the production of ceramic materials, optionally but preferably in combination with one or more ingredients which are typical in the field.

The wet oxidation step must continue long enough to achieve inertization of the sludge. The term "inertization" is used to mean that the organic component of the initial sludge is mineralized, i.e., essentially eliminated, because it is mostly oxidized to water and carbon dioxide, and is rendered water-soluble in the remaining fraction and therefore eliminated with the liquid phase that contains it. Inertization entails a great reduction of the organic and bacterial load of the sludge, allowing its stabilization and sanitizing. In an inertized sludge, the VSS content in the effluent is reduced by at least 75% with respect to the initial value, preferably at least 90%, more preferably by a percentage ranging from 90% to 100%.

The steps of wet oxidation and recovery of the solid component can be performed in a known manner and in conventional devices, in view of the need for the sludge to be treatable (i.e., pumpable) and for the reduction in VSS content to be equal to at least 75% of the initial value.

In a highly preferred embodiment, the steps i) of wet oxidation and ii) of recovery of the solid component occur according to the method, and with an apparatus, as described in a co-pending application entitled "Method and apparatus for wet oxidation of sludge", filed by 3V GREEN EAGLE S.p.A.. In particular, in this embodiment the step i) of wet oxidation of sludge with an SS content of less than 15% by weight on the total weight of the sludge comprises at least one step of increasing the temperature of the sludge by using at least one injection of high-pressure steam. The expression "high-pressure steam" is used to designate steam at a pressure ranging from 18 to 85 bars and in any case higher than the pressure at which wet oxidation occurs.

In a preferred embodiment, the wet oxidation step comprises the steps of:
a) providing excess sludge characterized by an SS content of less than 15%, ranging preferably from 4% to 8% by weight on the total weight of the sludge;
b) preheating at a pressure lower than 3 bars, preferably at ambient pressure, said sludge to a temperature ranging from 70°C to 140°C, preferably from 80°C to 100°C, by using
   - at least one injection of low-pressure steam which has a pressure ranging from 0.1 to 15 bars, or
   - one or more heat exchangers;
c) increasing the pressure of the sludge up to a pressure ranging from 15 to 80 bars;
d) introducing in a wet oxidation reactor the preheated and pressurized sludge, the oxygen required for oxidation of the sludge, and high-pressure steam, and leaving the oxidation reaction to proceed until the selected COD (cumulative oxygen demand) reduction is obtained.

In order to recover a solid residue (step ii), after steps a)-d) of oxidation, the following additional step is performed:
e) recovering the effluent of step d) and separating it into a component which contains the liquids and a component which contains the solids, which is then sent to the production of ceramic material.

Advantageously, after recovering from step e) the component which contains the solids and before sending it to value enhancement, the following additional step is performed at least once:
f) scrubbing with water, preferably with an alkaline aqueous solution, the component which contains the solids of the effluent recovered in step e).

Preferably, the SS content of the treated sludge ranges from 2% to 15% by weight on the total weight of the sludge.

If the sludge to be treated has an initial SS content of more than 15% by weight on the total weight of the sludge, it is possible to perform an additional step a') of diluting the sludge with water, wherein said dilution step must be performed as the first step.

If the sludge is to be oxidized by applying less heat, it is possible to increase the COD of the sludge by performing a step a") of concentrating the sludge, which must be performed before the other steps, optionally with the aid of flocculants and/or polyelectrolytes.

The terms "flocculants" and "polyelectrolytes" designate usually polymeric substances which are capable of producing the coagulation, flocculation and settling of the sludge. Examples of flocculants are inorganic flocculants selected among iron chloride and sulphate, aluminum chloride, polychloride and sulphate, and mixtures thereof. Examples of polyelectrolytes are organic polyelectrolytes selected among polyols, polyesters, polyethers, polyacrylates and/or polyacrylamides, optionally substituted, and mixtures thereof.

With the at least one injection of high-pressure steam, the temperature of the sludge is raised advantageously to a value ranging from 180°C to 260°C, a temperature which is the conventional one for oxidation to occur in industrially useful times.

As noted above, it is also possible and preferable for the step of preheating the sludge, if performed, to occur by means of one or more injections of low-pressure steam instead of by means of the conventional use of heat exchangers.

In a different manner, it is also possible to perform oxidation by avoiding to resort to low-pressure steam and exchangers, resorting instead to a single step of injecting high-pressure steam.

The expression "low-pressure steam" designates steam at a pressure ranging advantageously from 0.1 bars to 15 bars, a temperature ranging from 105°C to 200°C, which as explained below can be injected in different points according to the requirements but in any case necessarily upstream of the pump which feeds the sludge to the reactor.

The expression "high-pressure steam" designates steam at a pressure which is higher than the operating pressure of the oxidation reactor and ranges from 18 to 85 bars, advantageously from 30 bars to 55 bars, and a temperature ranging from 210°C to 300°C, preferably ranging from 235°C to 270°C.

Performing the steps of wet oxidation and recovery of the component which contains the solids as described above entails several advantages, including:
- the possibility to treat pumpable but highly concentrated (high-COD) sludge, minimizing the amount of energy to be applied externally in order to maintain the oxidation reaction at industrially acceptable rates, and
- the possibility to perform oxidation by eliminating partly, or more preferably completely, the use of heat exchangers, which are difficult and expensive to maintain due to the formation of deposits on their surfaces caused by sludge heating, which is well-known in the field.

It has been found surprisingly that the solid and inert component of the effluent of the oxidation of the sludge is a powder which has a fine and uniform particle size distribution. Chemical and particle size uniformity make the mineral component extremely suitable for use as raw material in further industrial processes and in particular for the production of ceramic materials.

As mentioned, after recovery and scrubbing, the inorganic stabilized solid fraction is formed and converted by heat into ceramic materials. With this step, it is possible to provide successfully, for example, granular and monolithic lightweight materials to be intended for technical uses in the building sector and specifically in the field of refractory materials.

The composition of a typical solid residue recovered from wet oxidation of an excess sludge has been found to be as follows: moisture content at 105°C, 40-50%; ignition loss at 600°C, 20-30%; analysis on the residue at 600°C: CaO 15-50%, P₂O₅ 10-30%, MgO 0-10%, SiO₂ 0-8%, Fe₂O₃ 0-6%, ZnO 0-2%, Al₂O₃ 0-2%, Cr₂O₃ 0-0.3%, MnO 0-0.3%, others 0-1%, where the percentages are by weight.

From a mineralogical standpoint, the inert residue was found to be constituted substantially by calcium phosphate typically organized into an apatite structure Ca₅(PO₄)₃. Other chemical elements are optionally present depending on the initial composition of the sludge, but other phases different from apatite are non-characterizing, since they occur occasionally and in small amounts. An amorphous phase has been found to be the collector of the chemical elements which find no place in the apatite structure, while a small percentage of VSS, at most 30% by weight on the total weight of the residue, is generally still present. However, it must be noted that the remaining organic portion is not chemically identical to the initial portion, since the oxidation treatment has made it stable, i.e., imputrescible and with no bacterial load.

Once the component of the effluent which contains the solids of the wet oxidation of sludge has been recovered, step iii) of value enhancement, which leads to ceramic products, can be defined schematically and in a non-limiting way by means of the following items:
- optional milling of the raw materials;
- formulation and mixing of the component of the product which contains the solids recovered in step ii);
- formation of the component;
- drying and firing of the formed component so as to provide a ceramic material.

In a preferred embodiment, step iii) comprises the steps of:
e) preparing a ceramic mix which comprises the inorganic residue obtained from step ii), advantageously scrubbed, optionally combined with at least one second ingredient, preferably a material which originates from the ceramic sector. This step includes everything related to the formulation, milling and mixing of the raw materials;
f) forming said mix by means of techniques which are conventional in the ceramic field or more advantageously by means of innovative techniques, which will be described hereinafter and allow to form spherical granules which are strong but very small; and
g) drying and firing the resulting mix so as to make the ceramization reactions occur.

The expression "ceramic material" designates a fired and formed material, either a finished ceramic article or preferably an intermediate ceramic material such as a granulate, which in turn can be used to provide finished ceramic articles, concretes and bonding agents.

In a preferred embodiment, the step e) of preparing the mix comprises the steps of:
e1) weighing the quantities of the components to be introduced in the mix;
e2) milling the various solid components so as to have a uniform particle size distribution, ranging preferably from 1 to 200 microns;
e3) wet or dry mixing of the components until homogenization is achieved.

The steps of weighing, milling and mixing can occur by way of known techniques. In a first step, the dry ingredients are mixed. If one of the ingredients is added in the form of a liquid, it is advantageous to introduce it at a later time with respect to dry powders, together with any water needed to reach the consistency of the mix which is most sought for the formation.

The optional ingredients added to the residue inertized by sludge oxidation are selected among the ones typically used in the field of ceramics (including technical ceramics), in the building and concrete sector, as well as among other waste materials of different origin (including organic ones). These optional ingredients are selected, for example, from the group which comprises:
- oxides and silicates, such as for example corundum, zirconium, zircon, spinel, rutile, andalusite, clay, kaolin, talc;
- carbonates and sulphates;
- non-oxides, such as for example carbides and nitrides;
- metallic phases, such as for example silicon, aluminum, metallic alloys in general;
- vitreous and sol-gel substances;
- bonding and adhesive organic substances;
- mixtures thereof.

In a highly preferred embodiment, the formation step occurs so as to give the mixture a spherical shape. In this embodiment, formation, which is designed to develop lightened materials, is selected among techniques for atomization, granulation or a combination of these two techniques.

Atomization is a technique which is known in the field of the preparation of ceramic powders to be molded by pressing (technical ceramics and tiles) and allows to form highly spherical granules which are hollow internally, usually with a goblet-like hole for connection to the outside. The atomization technique comprises preparing the mix as above so that it has the consistency of a slurry in which the solid portion ranges from 40% to 70% by weight on the weight of liquid fraction, and atomizing the mix within a vertical dryer so as to dry it rapidly. The variables on which one can work in order to change the characteristics of the atomized substance are correlated to the rheologic characteristics of the suspension (viscosity, flowability, amount of suspended solid) and to plant parameters such as the dimensions of the dryer, the drying temperature, the size and quantity of the atomizing nozzles. The person skilled in the art will know how to easily modify these parameters so as to obtain the intended result. Atomization is particularly convenient for producing small granules, particularly with an average diameter of less than 500 microns. One of the fundamental characteristics of the atomized substance, in addition to the flowability which derives from the spherical shape of the particles that constitute it, is high compressibility. Its characteristic and unavoidable shape (hollow and with a hole for connection to the outside) makes it particularly weak and compressible, adapted to form ceramic articles finished by pressing. This is the fundamental reason why the atomized substance is particularly advantageous as an intermediate component for forming finished ceramic articles.

Granulation comprises aggregating the material by agitating the ingredients in the form of dry powders which are gradually wet. The granules that form have a more or less conspicuous roundness, depending on parameters such as the mixing times or the ratio between powder size and formed granule size. Granulation provides solid spheres and, differently from atomization, is preferably adapted to provide less compressible granules which have a diameter of more than 500 microns.

In a particularly preferred embodiment, the formation technique comprises the combination of the techniques of atomization and granulation in this order. This combination provides for the production of a first granule by atomization, which is then subjected to granulation. Surprisingly, internally hollow spherical granules with a diameter of less than 500 microns but without the presence of the surface hole have been formed in this manner.

During the formation step it is possible to add one or more additives which are typical of the field and are known to contribute to the physical properties of the formed ceramic product. These optional ingredients comprise for example thickening agents, bonding agents, foaming agents and mixtures thereof. The quantities of these ingredients can be determined by the person skilled in the art by means of routine experiments.

Regardless of the formation technique that is used, the spheres are fired by applying temperature gradients and holding times which can be determined easily by a person skilled in the art and differ depending on the products to be obtained, on the raw materials and on the initial particle size distribution. Firing occurs conventionally in rotary kilns at maximum temperatures generally ranging from 950°C to 1500°C. The resulting spherical products are new and advantageous, since after firing they have a compressive strength of 30 to 50 MPa and a density of 0.3 to 0.5 g/cm³. The materials that have the highest ratios of mechanical compressive strength/density, i.e., the best, most advantageous and more enhanceable materials, can be provided with a particle size of less than 500 microns preferably by combining the atomization and granulation techniques and with a grain size of more than 500 microns preferably by granulation.

After the firing step, the ceramic material obtained with the combination of atomization and granulation has the appearance of a lightened granulate, constituted by a combination of materials having a preset composition, with a highly regular spherical shape, with a diameter of preferably less than 4 mm, more preferably ranging from 100 to 500 microns, with a density of less than 1 g/cm³, preferably ranging from 0.1 to 0.5 g/cm³, and closed or open porosity, which in any case can be modified according to the technical requirements. The advantages of such a granulate will become better apparent in the examples that follow.

All the parameters which are not mentioned explicitly above, such as in particular:
- the mutual percentages of the powders in the mixes,
- the mixing, milling, firing times,
- the milling techniques;
occur in a conventional manner and therefore can be determined by a person skilled in the art depending on the specific requirements by applying his normal knowledge and with the aid of routine tests.

In another aspect, the invention relates to an apparatus for carrying out a method which leads from industrial sludge to a ceramic granulate. This apparatus is characterized in that it comprises means for performing the wet oxidation of sludge, means for recovering the component of the sludge oxidation product which contains the solids, means for formulating and mixing the recovered component, and means for forming and firing the component so as to obtain a ceramic material. Means for milling the component recovered from wet oxidation are also optionally provided.

In a preferred embodiment, the apparatus for performing the wet oxidation of sludge (step i) and the recovery of the component which contains the solids (step ii) comprises at least one oxidation reactor, means for pressurizing said sludge and feeding it to said reactor, and means for adding oxygen inside said apparatus, and is characterized in that it comprises means for injecting steam at a pressure ranging from 18 to 85 bars in at least one point inside it and at least one settling tank which is arranged downstream of said reactor.

The presence of at least one settling tank is required in order to have means for separating the component of the effluent which contains the liquids from the component which contains the solids, which will be sent to enhancement.

Preferably, the means for injecting steam comprise nozzles and at least one high-pressure steam generator (such as an evaporator). The nozzles for injecting the high-pressure steam are arranged advantageously at at least one point selected between said at least one reactor and the means (pipes) for feeding the sludge under pressure to said reactor.

Preferably, the apparatus further comprises at least one preheating chamber, which is arranged upstream of said at least one reactor and is connected thereto.

Preferably, the apparatus further comprises at least one expansion chamber, which is arranged downstream of the at least one reactor. The settling tank is arranged downstream of said at least one expansion chamber, if said chamber is present.

Since it is important for the solid residue to be enhanced to contain the lowest possible amount of organic material, it is highly preferred for the apparatus to further comprise also at least one scrubber arranged downstream of said settling tank.

It is advantageous for the apparatus to comprise all the elements mentioned above.

As mentioned, it is possible and advantageous for the wet oxidation step (step i) to also use low-pressure steam. Therefore, this embodiment of the apparatus further comprises means for injecting low-pressure steam, which are arranged upstream of the means (pump) for pressurizing the sludge to be oxidized. The means for injecting low-pressure steam can be nozzles arranged at the at least one preheating chamber or arranged at means which feed said sludge to said preheating chamber.

In a preferred embodiment, the means for forming the mix are at least one among the following:
- at least one atomizer and
- at least one granulator
where if both are present, the at least one granulator is arranged downstream of the at least one atomizer.

The means for optionally milling the solid residue recovered from wet oxidation, the means for formulating and mixing the milled solid residue with any optional ingredients, and the means for firing the formed residue are of a conventional type.

Further characteristics and advantages of the present invention will become better apparent from the description of the following preferred embodiments, understood merely by way of non-limiting example.

### Example 1

A wet oxidation apparatus in which the excess sludge produced by the biological plant for purifying the wastewater of a chemical factory and various aqueous waste of external origin are treated with pure oxygen. The sludge is characterized by the following parameters:

| | | |
|---|---|---|
| SS | 2.8% = | 28000 mg/l |
| VSS/SS | | 0.85 |
| COD: | | 36000 mg/l |

The reaction parameters are:

| | |
|---|---|
| temperature: | 220-240°C, |
| pressure: | 40-50 bars. |

The plant operates with a reactor having an inside diameter of approximately 0.6 m and a height of approximately 5 m.

During normal operation, the reactor, which is kept at a pressure of 45 bars, is fed with 870 1/h of sludge as described above, preheated to 97°C by introducing in the preheating tank 130 kg/h of low-pressure steam (recovered from the atmospheric flash of the effluent of the reactor). 280 kg/h of steam, saturated at 55 bars, and oxygen in a stoichiometric quantity (approximately 30 kg/h) are also introduced in the reactor.

Due to the heat generated by the oxidation reaction and to the high-pressure steam that is introduced, the temperature of the reactor (head) rises to 240°C (which is also the output temperature from the reactor).

The effluent of the reactor (mixed phase) undergoes a first flash at a pressure of approximately 16 bars and 180°C, which allows to separate the reaction gases (carbon dioxide and oxygen) and the excess steam that is produced, and then undergoes a second flash at a pressure which is slightly higher than the atmospheric pressure (0.1-0.3 bars), producing the 130 kg/h of steam required to preheat the feed.

Approximately 940 1/h of wastewater having the following characteristics are obtained as liquid residue of the two subsequent flashes:

| | | |
|---|---|---|
| SS | 0.43% = | 4300 mg/l |
| VSS/SS | | 0.102 |
| COD: | | 11600 mg/l |

The resulting conversion (COD reduction) is higher than 65%. The reduction in total suspended solids is over 83% of the initial amount and the reduction in volatile suspended solids is approximately 98% of the initial amount. The suspended solids are very fine (maximum diameter approximately 50 microns; diameter 50 = 2.4-3.2 microns).

The wastewater that is produced is fed to a settling tank and separated into two fractions: a supernatant aqueous phase (approximately 900 1/h), which is recycled to the biological plant in order to be purified of the organic substance content, and a slurry, with approximately 10% suspended solids (approximately 401/h, SS = 10.2%).

The resulting slurry is accumulated on the bottom of the settling tank and is transferred every 4-6 hours into a conventional conical-cylindrical mixer-settler, where it is scrubbed repeatedly by mixing, subsequent settling and discharge of the supernatant, with alkaline solutions and neutral water until the mother liquor and the organic substances contained therein are removed completely. The discharged scrubbing wastewater is recycled to the biological plant in order to be purified of the organic substance content.

The scrubbed slurry is filtered on a filter press, obtaining panels with a dry substance content of approximately 50%.

The resulting panels have the following characteristics:

| | |
|---|---|
| Residue at 105°C (dry substance) | 48% |
| Residue at 600°C | 43.2% |
| Residue at 600°C (on dry substance) | 89.6% |

Analysis of the residue at 600°C:

| | |
|---|---|
| Aluminum | 11.1 mg/g of residue |
| Calcium | 306.2 mg/g of residue |
| Chromium | 1.9 mg/g of residue |
| Iron | 27.9 mg/g of residue |
| Phosphorus | 88.2 mg/g of residue |
| Magnesium | 38.7 mg/g of residue |
| Manganese | 2.4 mg/g of residue |
| Silicon | 25.4 mg/g of residue |
| Zinc | 3.6 mg/g of residue |
| Others (Ni, Pb, Cu), total | 2.4 mg/g of residue |

The panels are then dried in a drum dryer.

### Example 2

A wet oxidation plant in which pure oxygen is used to treat the excess sludge produced by the plant for biological purification of the wastewater of a chemical factory and various aqueous waste of external origin. The sludge, before being fed to the wet oxidation, is thickened, by means of a sifter and with the addition of small amounts of polyelectrolyte, in order to bring the concentration of the suspended solids to approximately 6%. The sludge thus concentrated is characterized by the following parameters:

| | | |
|---|---|---|
| SS | 5.6% = | 56000 mg/1 |
| VSS/SS | | 0.85 |
| COD: | | 72000 mg/l |

The reaction parameters are:

| | |
|---|---|
| temperature: | 220-240°C, |
| pressure: | 40-50 bars. |

The plant operates with a reactor having an inside diameter of approximately 0.6 m and a height of approximately 5 m.

During normal operation, the reactor, kept at a pressure of 45 bars, is fed with 870 1/h of sludge as defined above, preheated to 97°C by introducing in the preheating tank 130 kg/h of low-pressure steam (recovered from the atmospheric flash of the effluent of the reactor). 200 kg/h of saturated steam at 55 bars and oxygen in a stoichiometric quantity (approximately 30 kg/h) are also introduced in the reactor.

Due to the heat generated by the oxidation reaction and to the high-pressure steam introduced, the temperature of the reactor (head) rises to 240°C (which is also the output temperature from the reactor).

The effluent of the reactor (mixed phase) undergoes a first flash at a pressure of approximately 16 bars and 180°C, which allows to separate the reaction gases (carbon dioxide and oxygen) and the excess generated steam, and then undergoes a second flash, at a pressure which is slightly higher than atmospheric pressure (0.1-0.3 bars), which produces 130 kg/h of steam needed to preheat the feed. Approximately 880 1/h of wastewater with the following characteristics are obtained as liquid residue of the two subsequent flashes:

| | | |
|---|---|---|
| SS | 0.43% = | 4300 mg/l |
| VSS/SS | | 0.102 |
| COD: | | 11600 mg/l |

The resulting conversion (reduction of COD) is higher than 65%. The reduction in total suspended solids is higher than 83%, and the reduction in volatile suspended solids is approximately 98%. The suspended solids are very fine (d.max = approximately 50 microns; d.50 = 2.4-3.2 microns).

The resulting wastewater is fed to a settling tank and separated into two fractions: a supernatant aqueous phase (approximately 900 1/h), which is recycled to the biological plant in order to be purified of the organic substance content, and a slurry with approximately 10% suspended solids (approximately 40 1/h, SS = 10.2%).

The resulting slurry accumulates on the bottom of the settling tank and is transferred every 4-6 hours into a conventional conical-cylindrical mixer-settler, where it is scrubbed repeatedly by mixing, subsequent settling and discharge of the supernatant with alkaline solutions and water until the mother liquor is removed completely together with the organic substances contained therein. The discharged scrubbing wastewater is recycled to the biological plant to be purified of the organic substance content. The scrubbed slurry is filtered on a filter press, obtaining panels with a dry substance content of approximately 50%. The resulting panels have the following characteristics:

| | |
|---|---|
| Residue at 105°C (dry substance) | 52% |
| Residue at 600°C | 46.7% |
| Residue at 600°C (on dry substance) | 89.8% |

Analysis of the residue at 600°C:

| | |
|---|---|
| Aluminum | 13.2 mg/g of residue |
| Calcium | 299.1 mg/g of residue |
| Chromium | 1.9 mg/g of residue |
| Iron | 32.5 mg/g of residue |
| Phosphorus | 94.9 mg/g of residue |
| Magnesium | 36.1 mg/g of residue |
| Manganese | 2.4 mg/g of residue |
| Silicon | 25.5 mg/g of residue |
| Zinc | 3.6 mg/g of residue |
| Others (Ni, Pb, Cu), total | 2.5 mg/g of residue |

The panels are then dried in a drum dryer.

### Example 3

This example describes the advantages arising from the use of the mineral residue of wet oxidation of excess sludge in devising ceramic mixes adapted to provide ceramic products applied in the field of refractory materials.

Table 1 lists the composition of some ceramic raw materials, such as gypsum, calcite and wollastonite, used typically to add calcium to ceramic mixes. In this table, these compositions are compared with apatite, which as mentioned is the fundamental component, and in some cases the only component, of the inorganic material obtained from the wet oxidation of an inertization sludge. It can be appreciated that the mineral residue according to the invention is a valid replacement of other ingredients which add calcium.

**Table 1. Chemical composition of some minerals**

| % | Apatite Ca₅(PO₄)₃ | Gypsum CaSO₄-2H₂O | Calcite CaCO₃ | Wollastonite CaSiO₃ | Kaolinite Al₄[(OH)₈Si₄O₁₀ | Anorthite CaAl₂Si₂O₈ |
|---|---|---|---|---|---|---|
| SiO₂ | - | - | - | 52 | 47 | 43.3 |
| Al₂O₃ | - | - | - | - | 39 | 36.5 |
| CaO | 59 | 33 | 56 | 48 | - | 20.2 |
| POₓ* | 41 | - | - | - | - | - |
| SOₓ* | - | 42 | - | - | - | - |
| CO₂* | - | - | 44 | - | - | - |
| H₂O* | - | 25 | - | - | 14 | - |

| | | | | | | |
|---|---|---|---|---|---|---|
| * = substances lost when heated | | | | | | |

Hereinafter, the mineral residue replaces, in the formulation, other calcium-adding components, among which the most frequently used are, as mentioned, gypsum (CaSO₄·2H₂O) and calcite (CaCO₃).

For example, conventionally it is possible to obtain refractory bricks made of anorthite (CaAl₂Si₂O₈) by mixing approximately 40% gypsum and 60% kaolinite. This result can be obtained in another manner by using approximately 30-40% inorganic material obtained from wet oxidation with 60-70% kaolinite. Reference should always be made to Table 1 for the compositions of kaolinite and anorthite.

The following tables list examples of formulations of ceramic materials which are applied in the field of refractories:
1. unstructured ceramic made of anorthite (CaAl₂Si₂O₈);
2. structured ceramic with alumina and matrix composed of anorthite;
3. Two-phase ceramic composed of mullite (3Al₂O₃.2SiO₂) and anorthite (CaAl₂Si₂O₈) in different proportion.

The composition of these mixes, which are particular and common in the field of refractory ceramic materials, are given in Table 2.

**Table 2**

| | Chemical composition of mixes | | |
|---|---|---|---|
| | Si₂O% | Al₂O₃% | CaO% |
| 1) anorthite CaAl₂Si₂O₈ | 43.3 | 36.5 | 20.2 |
| 2) 40% alumina + 60% anorthite | 26 | 61.9 | 12.1 |
| 3a) 30% mullite + 70% anorthite | 36.9 | 49 | 14.1 |
| 3b) 50% mullite + 50% anorthite | 32.6 | 57.3 | 10.1 |
| 3c) 70% mullite + 30% anorthite | 28.2 | 65.7 | 6.1 |

In order to produce for example the mix 3b), (where mullite is 3Al₂O₃·2SiO₂), one might work in many different ways, by mixing different raw materials to always obtain the same final composition of the fired product. Four possible solutions are exemplified in Table 3.

**Table 3**

| Mixture | Percentage formulation of a 50% mullite - 50% anorthite ceramic product | | | | | | |
|---|---|---|---|---|---|---|---|
| | SiO₂ | Al₂O₃ | CaO | Clay | Gypsum | Calcite | ** |
| 1 | 57.5 | 32.4 | 10.1 | - | - | - | - |
| 2 | -- | 23 | -- | 53 | 24 | -- | -- |
| 3 | -- | 25 | -- | 59 | -- | 16 | -- |
| 4 | -- | 20 | -- | 45 | -- | -- | 35 |

However, not all solutions are equivalent in terms of advantages and costs. For example, the formulation (1) which is apparently the simplest and starts from the pure oxides is also the one that requires the greatest use of energy to produce the crystallization reactions of the phases that constitute the ceramic material. Moreover, the absence of clay forces the use of additives adapted to make the ceramic mix plastic and strong when unfired.

Mixes 2 and 3 instead resort to kaolinite clay as a vehicle for introducing silicon and alumina and to sulphates and/or carbonates as a vehicle for introducing calcium. However, both the sulphates and the carbonates, being selected among raw materials, have a cost which affects significantly the cost of the final product.

Mix 4 instead uses the inertized mineral residue (indicated in the table as "**") obtained by wet oxidation of a typical excess sludge as a replacement of the expensive raw materials, and wherein it has been found surprisingly that the procedure is kinetically faster than the use of the pure oxides and definitely more convenient from the point of view of costs with respect to procedures 2 and 3.

Another advantage which makes the use of the mineral residue according to the invention unexpectedly interesting is the contribution that the thermal breakdown of apatite gives to the material not only in terms of calcium but also in terms of P₂O₅, which was instead commonly believed to be eliminated during firing.

### Example 4

This example describes a method for forming a ceramic mix prepared with the inorganic residue of an oxidized excess sludge.

In this case, the operations may be different depending on the goal to be achieved and on the selected technique. It is possible to use all the formation techniques classically used, such as pouring, drawing, pressing, atomization and granulation. For the production, here preferred, of spherical granulates with a size ranging from 0.1 to 2 mm (100-2000 microns), it is preferable to use two techniques: atomization and/or granulation.

Spherical granulates with anorthite composition having a size of 100-300, 200-500, 500-1000, 1000-2000, 2000-4000 microns and with densities of 0.2-0.5 g/cm³ have been provided by using the anorthite mixture described in Example 3. These spherical granulate have been formed by atomization combined with granulation for particle sizes up to 1000 microns and by granulation for particle sizes greater than 1000 microns.

Surprisingly, due to these granulates it has been possible to improve significantly the production of anorthite refractory bricks. The production of these bricks is currently developed by pouring a mixture of gypsum and kaolinite. One critical parameter of this production is the large quantity of water required by the mix in order to reach the optimum processing state and the setting time of the article, which is a consequence of the rehydration of the gypsum. Until the brick has the ability to support its own weight without deforming, the brick cannot be extracted from the mold and sent to the subsequent processing steps. The use of the pre-fired granulates described above, which have the significant advantage of having an identical anorthite composition with respect to the matrix in which they are inserted, produces for example the advantage of using lower amounts of gypsum and water to form the articles by pouring, and consequently provides a significant acceleration of production times.

Conventional mixtures (comparison mixture 5**) and mixtures according to the invention (mixtures 1 to 4) suitable for the production of refractory anorthite bricks are given in Table 4, where the values express percentages by weight.

**Table 4**

| Mixture | Percentage formulation of mixes for producing anorthite bricks | | | | |
|---|---|---|---|---|---|
| | Gypsum | Kaolinite | Granulate | Granulate | Granulate |
| | | | 200-500 | 1000-2000 | 2000-4000 |
| 1 | 20 | 30 | 20 | 30 | -- |
| 2 | 20 | 30 | 20 | -- | 30 |
| 3 | 24 | 36 | -- | 20 | 20 |
| 4 | 28 | 42 | -- | -- | 30 |
| 5** | 40 | 60 | -- | -- | -- |

Tests on the physical characteristics of the resulting bricks have shown that thanks to the use of the solid granulate recovered from wet oxidation as described here, the finished ceramic article, with respect to the currently commercially available product, always has an advantage in terms of reduction of density and increase in mechanical strength. Following tests repeated on multiple series of anorthite bricks, it has been found for example that:
a) the density of traditional bricks ranges from 450 to 600 kg/m³, while the density of bricks produced according to the invention is lower by 5%-50%;
b) the mechanical compressive strength of traditional bricks ranges from 1.0 to 1.5 MPa, while the compressive strength of bricks produced according to the invention is higher by 20-200%.

The method according to the invention achieves the intended aim and objects, since it allows to eliminate a waste which up to now was considered as inevitably meant for disposal, with severe repercussions on costs and on the environment, by combining with a step of wet oxidation of the sludge a step for preparing ceramic matrices which enhances the value of the non-oxidizable mineral residue, making it return to the industrial cycle.

Although only some preferred embodiments of the invention have been described in the text, the person skilled in the art understands readily that it is in any case possible to obtain other embodiments which are equally advantageous and preferred.

The disclosures in Italian Patent Application No. MI2005A000307 from which this application claims priority are incorporated herein by reference.

## Claims

1. A method for converting and enhancing the value of biological sludge having an initial SS content of less than 15% by weight on the total weight of the sludge, comprising the steps of:
i) performing wet oxidation of said sludge until the VSS content is reduced by at least 75% of its initial value;
ii) recovering the product of the oxidation of said sludge and separating the component of said product which contains the liquids from the component which contains the solids; and
iii) using the component of the product which contains the solids recovered in step ii) as raw material to produce ceramic materials.

2. The method according to claim 1, wherein the sludge is excess sludge produced by biological purification plants.

3. The method according to claims 1 or 2, wherein the VSS content of the sludge is reduced by at least 90%, more preferably by a percentage ranging from 90% to 100%, with respect to the initial value.

4. The method according to one or more of claims 1 to 3, wherein the step i) comprises at least one step for increasing the temperature of said sludge by using at least one injection of high-pressure steam, wherein the high-pressure steam has a pressure ranging from 18 to 85 bars and in any case higher than the pressure at which wet oxidation occurs.

5. The method according to claim 4, comprising the steps of:
a) supplying excess sludge **characterized by** an SS content of less than 15%, preferably ranging from 4% to 8% by weight on the total weight of the sludge;
b) preheating, at a pressure lower than 3 bars, preferably at ambient pressure, said sludge to a temperature ranging from 70°C to 140°C, preferably from 80°C to 100°C, by using
- at least one injection of low-pressure steam at a pressure ranging from 0.1 to 15 bars, or
- one or more heat exchangers;
c) increasing the pressure of the sludge to a value ranging from 15 to 80 bars;
d) introducing in a wet oxidation reactor the preheated and pressurized sludge, the oxygen required for oxidation of the sludge, and high-pressure steam, and allowing the oxidation reaction to proceed until the selected COD reduction is achieved.

6. The method according to claims 1 and 5, which comprises, after step d), an additional step of:
e) recovering the effluent of step d) and separating it into a component which contains the solids and a component which contains the liquids.

7. The method according to claim 6, which comprises, after step e), an additional step of:
f) scrubbing with water, preferably with an alkaline aqueous solution, the component which contains the solids of the effluent recovered in step e).

8. The method according to claim 7, wherein the scrubbing step f) occurs with an alkaline aqueous solution.

9. The method according to one or more of the preceding claims, wherein the sludge has an initial SS content of more than 15% by weight on the total weight of the sludge, and wherein the method comprises an additional step a') of diluting the sludge with water and wherein said dilution step is to be performed as the first step.

10. The method according to one or more of claims 1 to 8, comprising a step a") of concentrating the sludge, to be performed before the other steps, optionally with the aid of flocculants and/or polyelectrolytes.

11. The method according to claim 10, wherein the flocculants and/or polyelectrolytes are usually polymeric substances capable of producing the coagulation and flocculation and settling of the sludge.

12. The method according to claim 5, wherein the step of preheating the sludge occurs with a single injection of low-pressure steam.

13. The method according to one or more of the preceding claims, comprising a single step of injecting high-pressure steam.

14. The method according to one or more of the preceding claims, wherein the low-pressure steam is injected upstream of the pump which feeds the sludge to the reactor and has a pressure advantageously ranging from 0.1 bars to 15 bars and a temperature ranging from 105°C to 200°C.

15. The method according to one or more of the preceding claims, wherein the high-pressure steam has a pressure which is higher than the operating pressure of the oxidation reactor and ranges from 18 to 85 bars, advantageously from 30 bars to 55 bars, and a temperature ranging from 210°C to 300°C, preferably ranging from 235°C to 270°C.

16. The method according to one or more of the preceding claims, wherein the composition evaluated at 600°C of the component which contains solids recovered from step ii) is as follows: CaO 15-50%, P₂O₅ 10-30%, MgO 0-10%, SiO₂ 0-8%, Fe₂O₃ 0-6%, ZnO 0-2%, Al₂O₃ 0-2%, Cr₂O₃ 0-0.3%, MnO 0-0.3%, others 0-1%, where the percentages are by weight.

17. The method according to one or more of the preceding claims, wherein step iii) comprises the steps of:
e) preparing a ceramic mix which comprises the component which contains the solids recovered in step ii), optionally combined with at least one second optional ingredient selected among the materials that arrive from the field of ceramics, building, cements, and mixtures thereof;
f) forming said mixture; and
g) drying and firing the formed mix so as to obtain a ceramic material.

18. The method according to claim 17, further comprising a step for milling said component, the milling step occurring before the mix is prepared.

19. The method according to claims 17 and 18, wherein step e) comprises the steps of:
e1) weighing the quantities of the components to be introduced in the mix;
e2) milling the various solid components so as to have a uniform particle size distribution, ranging preferably from 1 to 200 microns;
e3) dry or wet mixing of the components until homogenization is achieved.

20. The method according to one or more of claims 17 to 19, wherein the optional ingredients are selected from the group which consists of:
- oxides and silicates;
- carbonates and sulphates;
- non-oxides;
- metallic phases;
- vitreous and sol-gel substances;
- organic bonding agents and adhesives; and
- mixtures thereof.

21. The method according to one or more of claims 17 to 20, wherein the step f) of forming the mix comprises a step selected among:
- atomizing the mix,
- granulating the mix, or
- atomizing and then granulating the mix.

22. An apparatus for carrying out a method for converting and enhancing the value of biological sludge having an initial SS content of less than 15% by weight on the total weight of the sludge, **characterized in that** it comprises:
- means for the wet oxidation of said sludge,
- means for recovering the component of the product of the oxidation of the sludge which contains the solids,
- means for formulating and mixing said recovered component, and
- means for forming and firing said recovered component.

23. The apparatus according to claim 22, **characterized in that** the means for wet oxidation of said sludge comprise at least one oxidation reactor, means for pressurizing said sludge and feeding them to said reactor, means for adding oxygen inside said apparatus and means for injecting steam which has a pressure ranging from 18 to 85 bars in at least one point within said apparatus.

24. The apparatus according to claim 23, **characterized in that** said means for injecting steam comprise nozzles and least one high-pressure steam generator.

25. The apparatus according to one or more of claims 23 and 24, **characterized in that** it further comprises at least one preheating chamber arranged upstream of said at least one reactor and connected thereto.

26. The apparatus according to one or more of claims 23 to 25, **characterized in that** it further comprises at least one expansion chamber arranged downstream of the at least one reactor.

27. The apparatus according to one or more of claims 22 to 26, **characterized in that** the means for recovering the component of the product of the oxidation of the sludge which contains the solids comprise at least one settling tank arranged downstream of said means for wet oxidation of said sludge.

28. The apparatus according to claim 27, **characterized in that** it further comprises at least one scrubber arranged downstream of said settling tank.

29. The apparatus according to claim 22, **characterized in that** it comprises all the elements of claims 23-28.

30. The apparatus according to claim 24, **characterized in that** the nozzles for injecting the steam are arranged at at least one point selected between said at least one reactor and said means for feeding the sludge under pressure to said reactor.

31. The apparatus according to one or more of claims 23 to 30, **characterized in that** it further comprises means for injecting low-pressure steam at a pressure ranging from 0.1 to 15 bars, said means being arranged upstream of said means for pressurizing said sludge.

32. The apparatus according to claims 25 and 31, **characterized in that** said means for injecting low-pressure steam are nozzles arranged at said at least one preheating chamber.

33. The apparatus according to claims 25 and 31, **characterized in that** said means for injecting low-pressure steam are nozzles arranged at means which feed said sludge to said preheating chamber.

34. A ceramic material obtainable according to the method according to one or more of claims 1 to 21.

35. The ceramic material according to claim 34, in the form of a ceramic granulate which is internally hollow, lacks a surface hole, has a very regular spherical shape, a diameter of less than 4 mm, preferably ranging from 100 to 500 microns, with a density of less than 1 g/cm³, preferably ranging from 0.1 to 0.5 g/cm³, and closed or open porosity.

36. The ceramic material according to claim 34, in the form of a refractory anorthite brick **characterized in that** it further comprises gypsum and kaolinite.

37. Use of a ceramic granulate according to claim 35 to produce finished ceramic materials.
